# EUROPEAN PATENT APPLICATION

(11) **EP 2 276 013 A1**
(43) Date of publication of application: **19.01.2011**
(21) Application number: 09762595.8
(22) Date of filing: 25.03.2009
(51) Int. Cl.: G09B 5/06

(54) **CHILDREN S EDUCATIONAL MAT**

(30) Priority: 11.06.2008 KR 20080054711
(71) Applicant: Chumsori Co., Ltd, Geumcheon-gu, Seoul 153-778 (KR)
(72) Inventor: KIM, Hee Jeong, Seoul 152-080 (KR)
(74) Representative: Wagner, Bernhard Peter
(86) International application number: PCT/KR2009/001520
(87) International publication number: WO 2009/151208

(57) **Abstract**

The present invention is suggested to improve the user input method when operating learning machines and game machines. The suggestion is intended to operate a system through a mat in order to overcome the limits of previous methods using a mouse, a stylus pen, a keyboard, etc., in user input methods. Compared with the previous methods, the method using the mat provides a variety of operation methods. In particular, curiosity can be stimulated in infants and children through physical activities and provides physical exercise. Furthermore, the emotional quotient of infants and children can be increased and the function as dynamic play equipment can be improved. Therefore, it is expected that the benefits of learning and exercise can be increased. In addition, it is expected to prevent the injury of infants and children and reduce noise in an apartment by enabling the infants and the children to play or study on the mat. The present technology is able to prominently affect the physical growths of kids or disabled persons. The invention includes: a mat (100) of which the surface is divided into sections wherein learning targets (102) are indicated on each section; and a unit that is included in the mat (100). When kids selects (step on, press, contact, etc.) the sections on the surface of the mat (100), the mat senses the selection. Then, a controller (300) outputs educational and alarm date included in internal and external memory units after receiving the data wirelessly or by wire in a multi-functional learning machine. Through the unit, the surface of the mat can be changed and the mat can be added, expanded and coupled with another mat.

## Description

### Technical Field

The present invention relates to an educational mat for children as learning means which is capable of performing both of audiovisual (mental) and physical (bodily) learning and amusement of infants and growing children and minimizing a negligent accident which may occur when they collide with or fall down on the mat during their learning and amusement.

### Background Art

Nowadays, with the increase of social income and the nuclearization of family, interests in education of infants and children are highly escalating.

Conventional learning methods are simple static empirical methods which provide insufficient simulation of curiosity, low concentration and insufficient physical activity.

For example, in the related art, learning machines have been populated which input and output various kinds of images (including Hangul consonants/vowels, pictures, etc.) and sound effects (including voice, natural and mechanical sound, etc) through a touch screen operated by using fingers and/or a pen (electronic pen or the like).

However, the above-mentioned conventional children learning machines provide limited learning motivation and interest since they can not satisfy children in terms of activity and dynamics (physical activity and exercise) and tactual sense (emotion by contact), although they satisfy the children to some degree in terms of audiovisual sense through image, voice and so on.

In addition, national health is threatened by childhood obesity due to lack of childhood activity in most urban life, and since the conventional children learning machines are solidified equipment made of, for example, plastics, there is a possibility of negligent accident if children who have insufficient attentiveness and awareness collide with or fall down on the machines during learning.

### Disclosure

### Technical Problem

To overcome the above-mentioned problems of the conventional techniques, it is an object of the present invention to provide a children learning mat which is capable of providing a learning means satisfying both of audiovisual amusement and physical amusement, thereby doubling user's interest and ensuring activity of growing children for the audiovisual amusement and educational effects, which may result in physical growth and increased children educational effects.

### Technical Solution

A children learning mat of the present invention includes a mat section including a learning data input unit and a data input/output unit, and a control box which processes stored information and input data. The mat section is set with sections whose coordinates can be recognized by an input device, a sensor (pressure sensor, a temperature sensor, a thermal sensor, an infrared sensor or the like) is contained in each section, and a surface recorded with visual (picture and character) and tactile information is formed on a portion corresponding to each section. In addition, an information display part on the surface of the mat may be attached/detachable by a user depending on learning use. A plurality of small mats may be interconnected to be extended via a connector. The data input/output unit manages learning information using various kinds of memory cards. The control box receives coordinate information from the mat, reads learning data corresponding to each coordinate of each mat form a memory, and outputs the read data as an audiovisual form, electrical vibration and the like. A communication between the control box and the mat is conducted by RF, infrared, wires and the like. In operation, first, characters, symbols, pictures tactile materials and so on for the learning information are displayed on the mat in accord with preset learning data coordinates. When a user selects a corresponding coordinate (learning section), a main controller and the mat are communicated each other. Upon receiving the learning information, the main controller reads data from a learning memory and transmits the read data having a preset value to an information output unit (an output unit of the mat or a peripheral output device) to allow a user to learn.

### Advantageous Effects

First, since an input/output device is contained in a shock-absorbing mat, this technique can extend learning functions of the conventional static methods to achieve a dynamic amusement function (using all portions of a body including hands, foots, etc.) and can be more widely applied to development of a variety of children learning machines.

Second, it is possible to minimize injury of users by using shock-absorbing materials.

Third, this technique provides good cleaning ability and storage ability.

### Description of Drawings

Fig. 1 is a schematic perspective view of a children learning mat according to a first embodiment of the present invention;
Fig. 2 is a main part perspective view of a stacked structure including components constituting the mat of Fig. 1;
Fig. 3 is a main part sectional view of a stacked structure including components constituting a section coordinate generating means of Fig. 1;
Fig. 4 is a block diagram showing a system configuration of a control box of Fig. 1;
Figs. 5 to 7 are main part perspective views showing an example of another application of the mat of Fig. 1;
Fig. 8 is a main part perspective view showing an example of still another application of the mat of Fig. 1;
Fig. 9 is a schematic perspective view of a children learning mat according to a second embodiment of the present invention;
Fig. 10 is a main part perspective view of a stacked structure including components constituting the mat of Fig. 9;
Fig. 11 is a main part perspective view showing an example of another application of the mat of Fig. 9.

### <Reference Numerals>

- 100:: mat
- 101:: cover
- 102:: learning target
- 110:: upper buffering plate
- 120:: lower buffering plate
- 130:: replaceable sheet
- 200, 600:: section coordinate generating means
- 210:: upper circuit film
- 211, 213:: contact terminal
- 212:: elastic projection
- 220:: insulating film
- 221:: contact hole
- 230:: lower circuit film
- 300:: control box
- 310:: information output unit
- 311:: speaker
- 312:: display
- 320:: data storage unit
- 321:: internal memory
- 322:: external memory interface
- 323:: external memory
- 330:: control unit
- 340:: wired/wireless receiving unit
- 400:: connector
- 401, 401a, 402, 402a:: connection jack
- 403a:: copula
- 404a:: metal terminal
- 403:: cable
- 500:: touch pen

### Mode for Invention

Hereinafter, exemplary embodiments of the present invention will be described with reference to the accompanying drawings where the same or similar components are denoted by the same reference numerals. In the following detailed description, concrete description on related functions or constructions will be omitted if it is deemed that the functions and/or constructions may unnecessarily obscure the gist of the present invention.

### <First Embodiment>

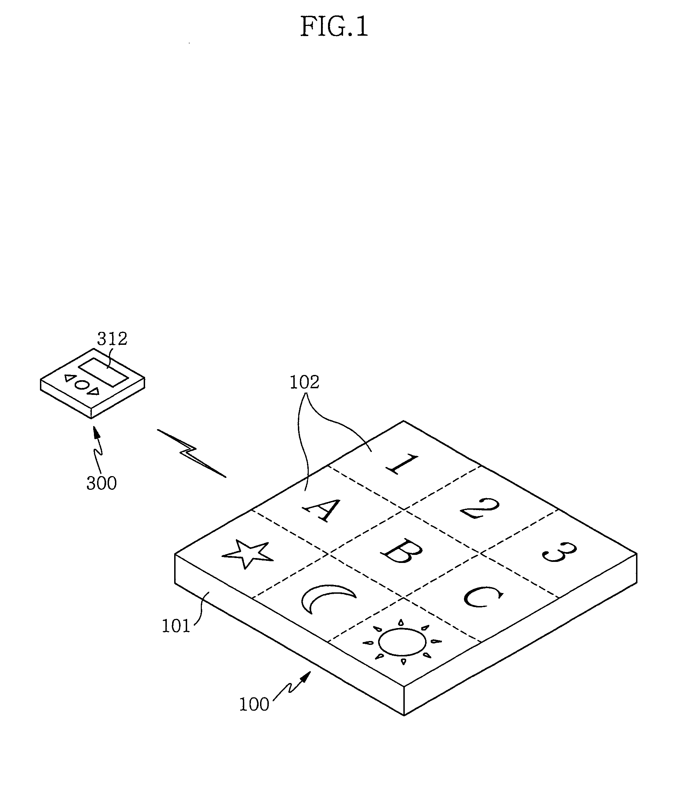

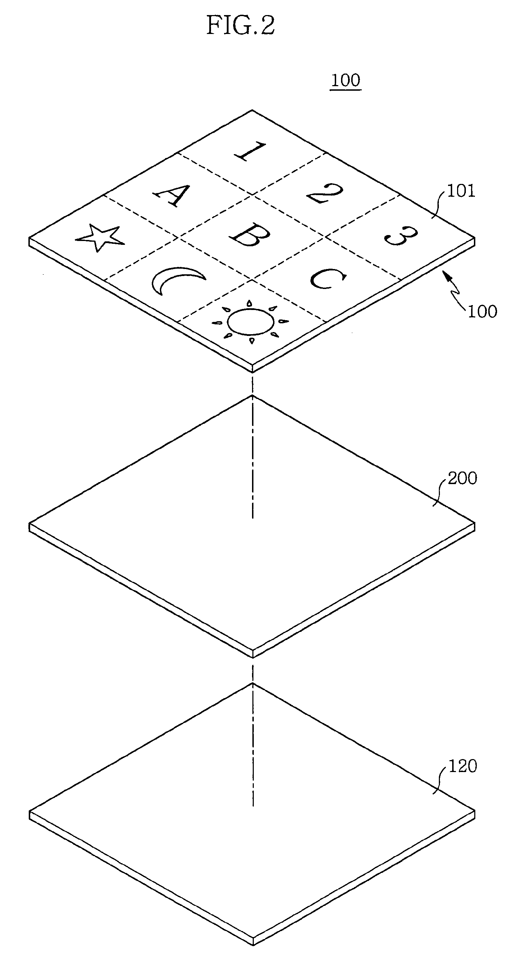

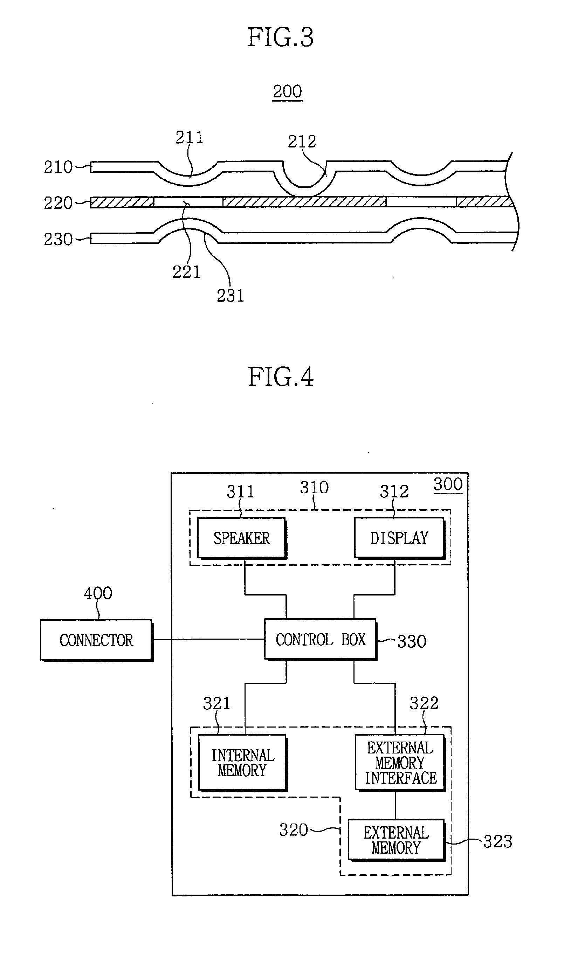

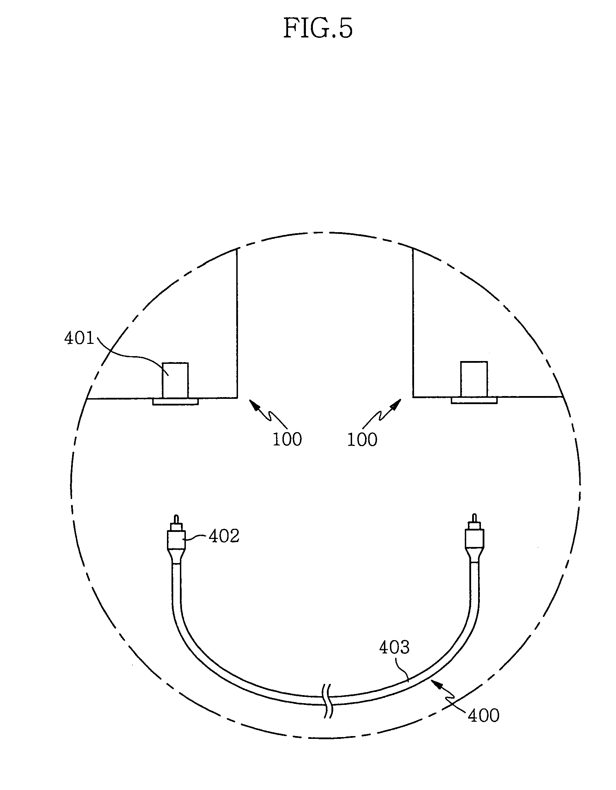

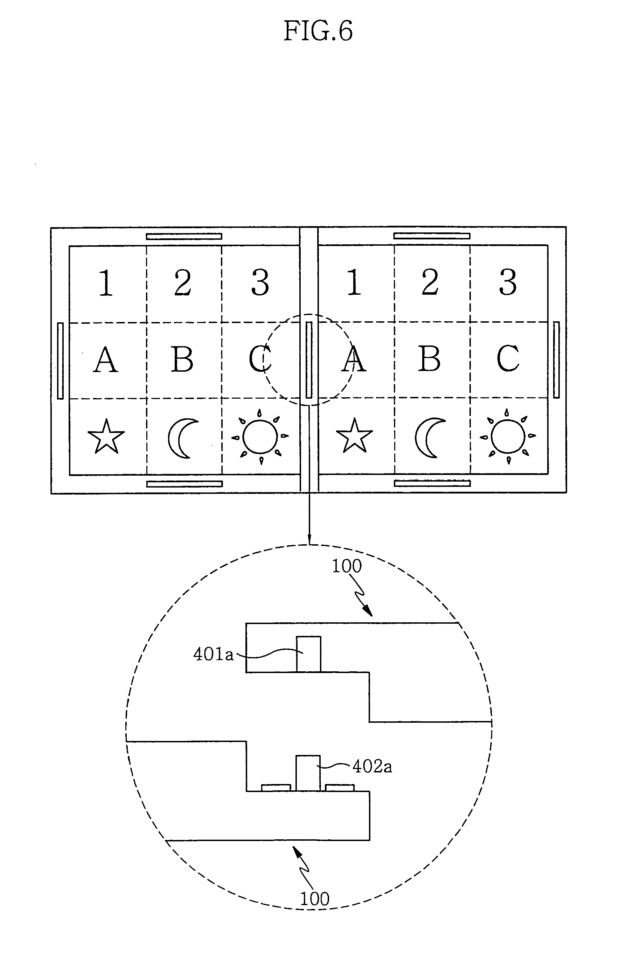

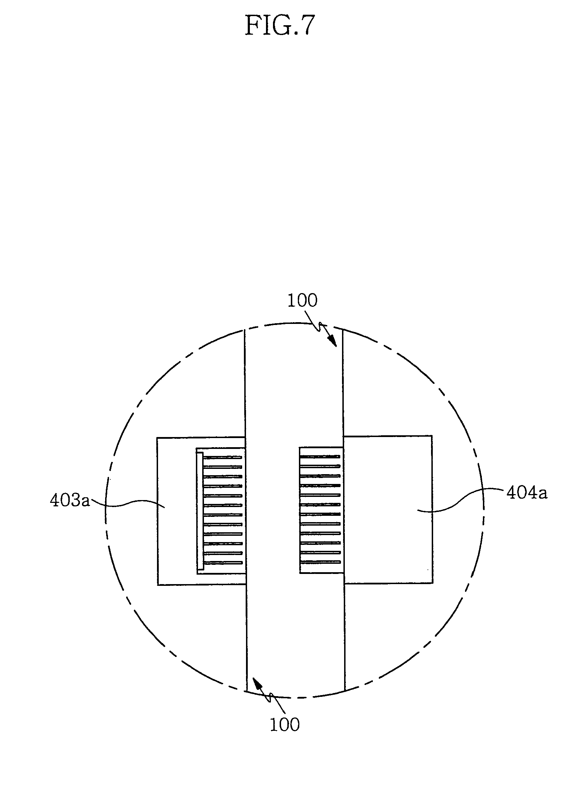

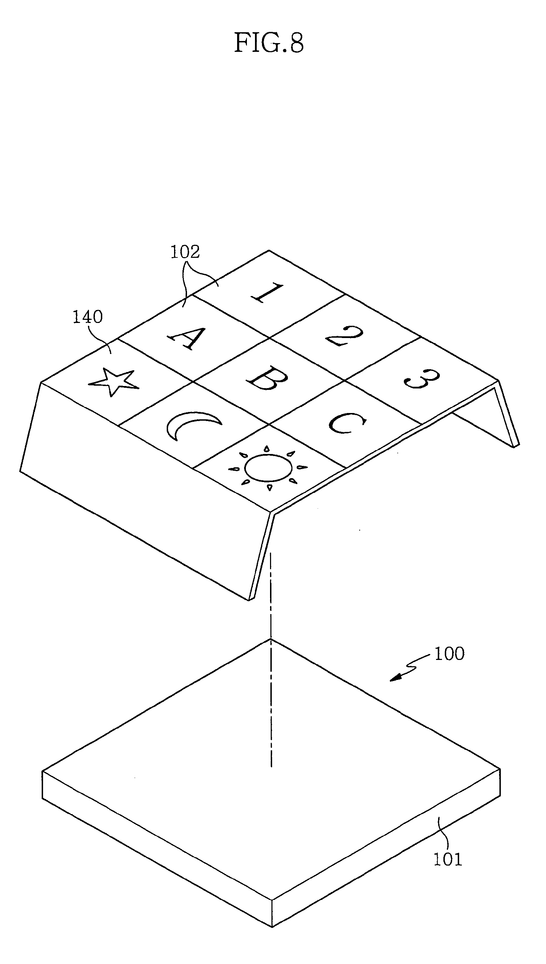

Fig. 1 is a schematic perspective view of a children learning mat according to a first embodiment of the present invention, Fig. 2 is a main part perspective view of a stacked structure including components constituting the mat of Fig. 1, Fig. 3 is a main part sectional view of a stacked structure including components constituting a section coordinate generating means of Fig. 1, Fig. 4 is a block diagram showing a system configuration of a control box of Fig. 1, Figs. 5 to 7 are main part perspective views showing an example of another application of the mat of Fig. 1, and Fig. 8 is a main part perspective view showing an example of still another application of the mat of Fig. 1.

As shown, according to a first embodiment of the present invention, a children learning mat generally includes a mat 100, a section coordinate generating means 200 and a control box 300.

First, the mat 100 includes an upper buffering plate 110 and a lower buffering plate 120, which are stacked in order and are covered by their respective covers 101, with the front side of each of the covers 101 divided into a plurality of sections on which learning targets 102 are displayed.

The learning targets 102 on the sections may include different learning contents (for example, numbers, characters, figures, shape of animals and plants, artificial structures, etc.) depending on age of children, and their arrangement is adjusted to efficiently provide children with athletic amusement.

In addition, the mat 100 of the present invention is basically used for learning in a condition where it is placed on a floor, but if necessary, a fixing means to allow the mat 100 to be hung on a wall is preferably provided in the vicinity of an edge of the mat 100. Examples of the fixing means may include a Velcro tape, a zipper, holes and nails for wall-hanging, hooks, or any other means which can be installed on a wall.

In addition, the learning targets 102 may be also provided in the rear side of the mat 100 of the present invention in correspondence to the learning targets 102 of the front side of the mat so that the mat 100 can be reversely used.

As a device which generates section-per coordinate contact signals representing positions of the sections according to pressure or the like produced when the children step on or press the sections provided on the front side of the mat 100, the section coordinate generating means 200 is interposed between the upper buffering plate 110 and the lower buffering plate 120 which constitute the mate 100.

In more detail, the section coordinate generating means 200 has a structure where an upper circuit film 210, an insulating film 220 having contact holes 221 formed therein, and a lower circuit film 230 are stacked in order from the top. Each of the upper circuit film 210 and the lower circuit film 220 is provided with projecting contact terminals 211 and 231 corresponding to the contact holes 221 of the insulating film 220. Thus, only contact terminals 211 and 231 of sections to which pressure produced by the children is applied are contacted each other, thereby generating the section-per coordinate contact signals which are programmed to be transmitted to the control box 330 which is electrically connected to the section coordinate generating means 200.

In addition, in the bottom of the upper circuit film 210 are formed elastic projections 212 which project to be higher than the contact terminals 211, which results in further improvement of precision related to the generation of the section-per coordinate contact signals.

The control box 300 is connected to the section coordinate generating means 200 by wire/wireless. Upon receiving a section-per coordinate contact signal from the section coordinate generating means 200, the control box 300 outputs section-per learning information, which includes learning contents related to a learning target 102 on a section corresponding to the received section-per coordinate contact signal and is perceivable by the children.

The control box 300 generally includes an information output unit 310 which outputs the section-per leaning information, a wired/wireless receiving unit 340 which receives the section-per coordinate contact signals from the section coordinate generating means 200 by wired/wireless, a data storage unit 320 which stores the section-per learning information corresponding to the learning targets 102 on the sections corresponding to the section-per coordinate contact signal received through the wired/wireless receiving unit 340 so that the information can be output through the information output unit 310, and a control unit which controls the entire operation of the above components.

In this embodiment, the information output unit 310 may include a speaker 311 which allows the children to perceive the learning contents of the learning targets 102 with sound, and a display 312, such as a liquid crystal display, which displays the learning contents as multimedia information including combinations of still images and moving images for maximization of effects of audiovisual amusement, in addition to the sound. In one embodiment, the speaker 311 and the display 312 may be incorporated into or separated from the control box 300 depending on a selection by a manufacturer.

The data storage unit 320 storing the section-per learning information basically includes an internal memory 321 and may optionally include an external memory 323 for constant update of the section-per learning information from the outside. For this end, the control box 300 may further include an external memory interface 322 which communicates data stored in the external memory 323.

In this embodiment, examples of the external memory 323 may include a USB (Universal Media Bus) memory stick, a CF (Compact Flash), an MMC (Multi Media Card), a SD (Secure Digital), an XD (xD-Picture Card), a SM (Smart Media), and any other external memories known in the art, and accordingly, the interface 322 may be configured to interface one selected from such various kinds of external memories.

In addition, the external memory interface 322 of the control box 300 may be connected, via a USB cable, to a PC (Personal Computer) connected to a network-based learning server (not shown) so that education contents such as the section-per learning information can be received from the learning server.

It is difficult for supervisors (parents, teachers, etc.) to continue to watch children during learning. Accordingly, in the children learning mat according to the first embodiment of the present invention, in order to prevent the children from neglecting their learning or leaving a leaning place, the control unit 330 of the control box 300 is programmed to output an alarm signal through the information output unit 310 if a section-per coordinate contact signal is input to the control unit 330 for a preset period of time.

To this end, an alarm signal such as buzzer sound or voice may be stored in the data storage unit 320 in advance.

In addition, in the children learning mat according to the first embodiment of the present invention, each of the learning targets 102 displayed on the front side of the cover 101 constituting the mat 100 may be attachable/detachable in order to more efficiently update learning information for each section depending on an age of the children.

To this end, a detachable sheet 130 for replacement is attached to the front side of the mat 100 on which the learning targets 102 are displayed, and the learning targets 102 divided by each section are displayed on the front side of the detachable sheet 130 for replacement.

In this embodiment, examples of an attaching/detaching means between the mat 100 and the detachable sheet 130 may include a Velcro tape, a zipper lock, holes and nails for wall-hanging, hooks, or any other means known in the art, as described above.

In addition, several mats 100 may be all around connected with each other in order to provide strength of athletic amusement in step in accord with an age of the children during learning.

To this end, section-per coordinate contact signals generated in the connected mats 100 may be transmitted to the control box 300 by wireless, or after sides of the mats 100 are interconnected via a connector 400 to concentrate the section-per coordinate contact signals on one of the mats 100, the section-per coordinate contact signals may be transmitted to the control box 300 to the one mat 300 by wired/wireless.

In this embodiment, the connector is electrically connected to the mats connected to the control box 300 by wired/wireless and may include female connection jacks 401 exposed at edges of the mats 100, and male connection jacks 402 connected respectively to both ends of a cable 403.

In another embodiment, in an effort to improve coupling between the mats 100, both opposite sides of the mat 100 may be manufactured to have their respective stepped structures to overlap with each other, and female and male connection jacks 401a and 402a may be respectively formed in opposite layers of the stepped structures.

In still another embodiment, the female and male connection jacks 401, 401a, 402 and 402a provided to constitute the connector 400 may be replaced with female and male pins, that is, a copula 403a and a metal terminal 404a.

In addition, if a new mat 100 is additionally connected to the existing mat 100 using the connector 400, section-per learning information related to learning targets provided in the existing mat 100 and the additional mat 100 may be updated through the external memory 323, and, by separating and resetting section-per coordinate contact signals generated in the additional mat 100 from the section-per coordinate contact signals generated in the existing mat 100, the control unit of the control box may recognize the reset section-per coordinate contact signals and output the corresponding section-per learning information by referring to the section-per coordinate contact signals generated in the additional mat 100.

In addition, the adjacent mats 100 connected with each other by the connector 400 may be more securely fixed by sticking female and male Velcro tapes to all sides of the mats 100, attaching buttons and anchors to all sides of the mats 100, attaching female and male zippers to all sides of the mats 100, forming projecting unevenness on all sides of the mats 100, a combination thereof, or through any other fixing means known in the art.

In addition, although not shown, a humidity sensing unit provided with a humidity sensor is contained in the mat 100. The humidity sensing unit senses humidity which may increase if children spill impurities such as water on the mat 100 or take an excreta such as pee or shit on the mat 100, and then generates an alarm output request signal which is then transmitted to the control box 300.

The control box 300 receives the alarm output request signal through the wired/wireless receiving unit 340 and inputs it to the control unit 330. Upon receiving it, the control unit 330 outputs an alarm signal through the information output unit 310 so that a guardian can clean way impurities and excreta quickly.

In addition, although not shown, a temperature sensing unit provided with a temperature sensor is contained in the mat 100. The temperature sensing unit senses temperature of heat generated from children who sleep on the mat 100, and then, if the sensed temperature of heat is higher than a preset temperature, for example, 37.5°C, generates an alarm output request signal which is then transmitted to the control box 300.

The control box 300 receives the alarm output request signal through the wired/wireless receiving unit 340 and inputs it to the control unit 330. Upon receiving it, the control unit 330 outputs an alarm signal through the information output unit 310 so that a guardian can immediately perceive a high fever of children and quickly cope with the fever.

Hereinafter, a learning method through the children learning mat according to the first embodiment of the present invention will be described in brief.

First, several mats 100 are interconnected via the connector 400 and are placed on a wall or a floor. Next, the control box 300 is operated to allow children to perform a leaning.

In the learning performance, when the children select (step one or press) any section located on the mats 100, the section coordinate generating means 200 stacked on the mats 100 generates section-per coordinate contact signals representing positions of the corresponding sections and transmits them to the control box 300 by wired/wireless.

The control box 300 inputs the transmitted section-per coordinate contact signals to the control unit 330. The control unit 330 reads section-per learning information, which is learning contents related to learning targets 102 corresponding to the input section-per coordinate contact signals, from the data storage unit 320, and then outputs the read section-per learning information through the information output unit 310, thereby providing growing children with audiovisual amusement and athletic amusement and hence metal and physical learning.

### <Second Embodiment>

Hereinafter, configuration and operation of a children learning mat according to a second embodiment of the present invention will be described. In the following description on the second embodiment, explanation of the same components and operation as the first embodiment will be omitted for the purpose of clarity.

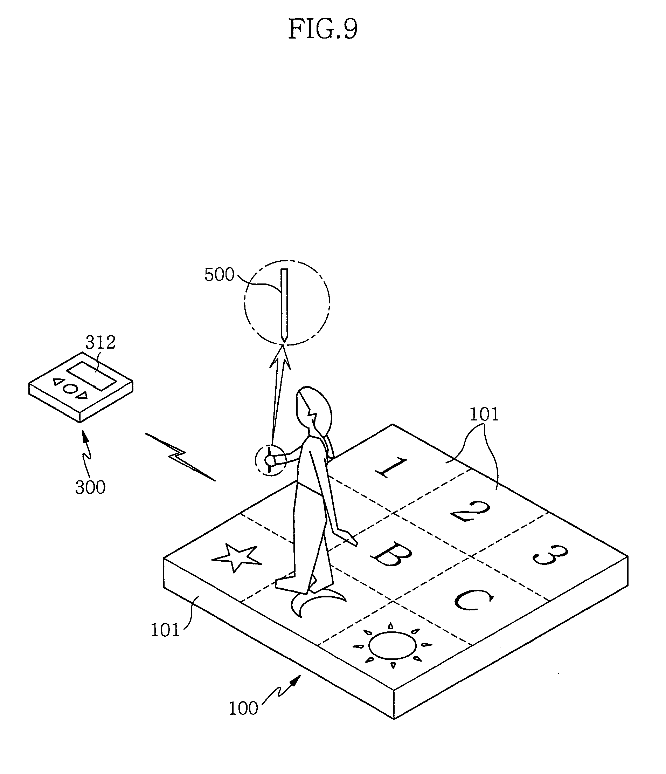

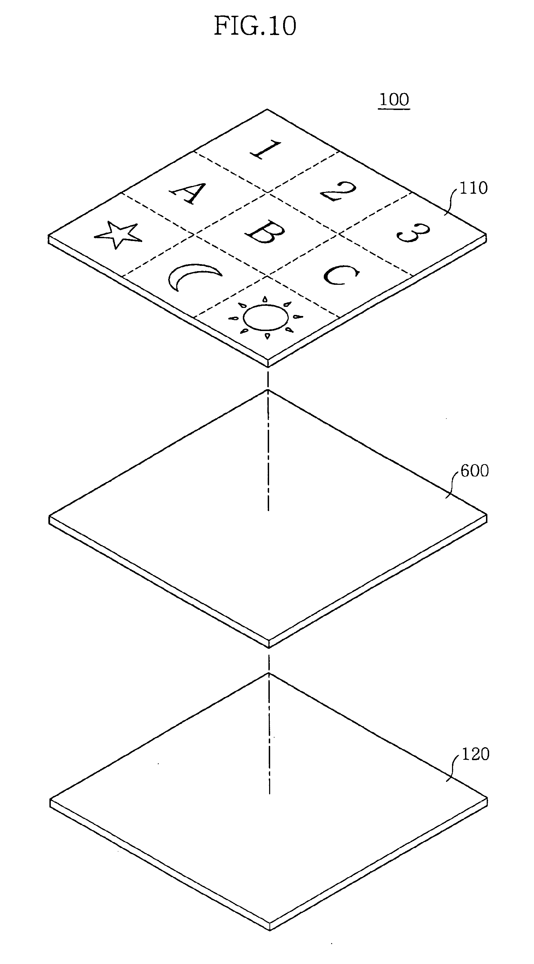

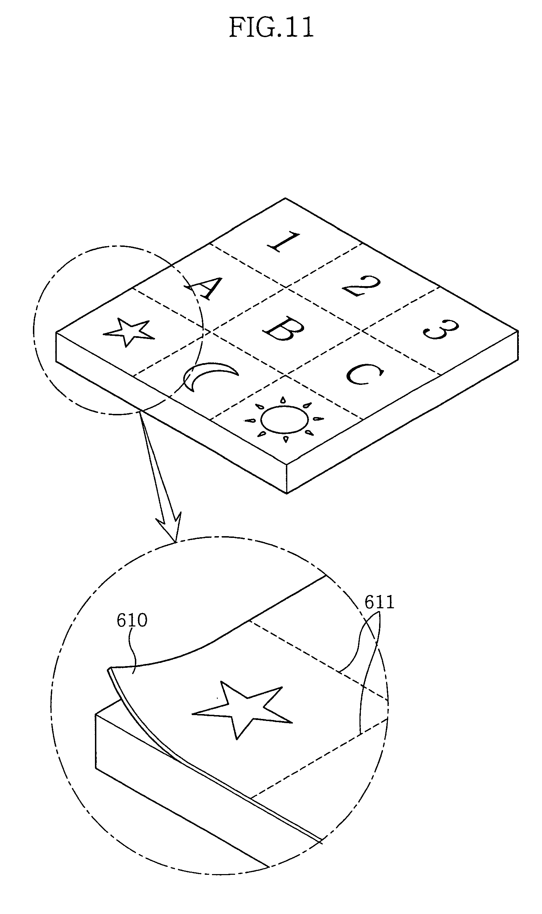

Fig. 9 is a schematic perspective view of a children learning mat according to a second embodiment of the present invention, Fig. 10 is a main part perspective view of a stacked structure including components constituting the mat of Fig. 9, and Fig. 11 is a main part perspective view showing an example of another application of the mat of Fig. 9.

The shown children learning mat according to the second embodiment of the present invention has the same object as that of the first embodiment.

However, the second embodiment is partially different from the first embodiment in terms of technical configuration to accomplish such an object. Specifically, the mat 100 and the control box 300 including the information output unit 310 of the children learning mat according to the second embodiment of the present invention have the same configuration and operation as those of the first embodiment except for a function or algorithm of the section coordinate generating means 200 for generating the section-per coordinate contact signals.

The function of the section coordinate generating means 200 of the first embodiment is to generate the section-per coordinate contact signals according to pressure produced when the children step on or press the mat.

On the contrary, the second embodiment provides an additional touch pen 500 in addition to a section coordinate generating means 600, thereby providing two types of functions, i.e., capacitance type and scan type.

First, in case of capacitance type function, the touch pen 500 is a conductor and the section coordinate generating means 600 is a touch sensor. Touch of the touch pen 500 with the touch sensor changes a capacitance, thereby allowing the touch sensor to detect a certain voltage/current to generate a section-per coordinate contact signal of a corresponding touched section.

Referring to Fig. 9, in case of scan type function, the touch pen 500 is a scanner and the section coordinate generating means 600 is a film 610 on which position coordinate codes 611 representing positions of the sections divided on the front side of the mat 100 are printed.

Here, the film 610 is attached to the uppermost of the front side of the mat 100, and, when the touch pen 500 contacts and scans a section on which a corresponding learning target 102 is located, the film 610 generates a section-per coordinate contact signal of the corresponding contacted section.

In addition, as the scanner, the touch pen 500 transmits the generated section-per coordinate contact signal to the control box 300 by wired/wireless.

Further, a pressure sensing unit (not shown) provided with a pressure sensor may be additionally contained in the mat 100. If a pressure is not sensed during a preset period of time, the additional pressure sensing unit generates an alarm output request signal and the control box receives the alarm output request signal generated in the pressure sensing unit and outputs an alarm signal through the information output unit.

## Claims

1. A children learning mat comprising:
- a mat (100) whose front side is divided into sections on which learning targets (102) are displayed;
- a section coordinate generating means (200) which is contained in the mat (100) and generates a section-per coordinate contact signal representing a position of a section selected according to a pressure produced when children step on or press the divided sections on the front side of the mat (100);
- an information output unit (310) which outputs section-per learning information; and
- a control box (300) which is connected to the section coordinate generating means (200) by wired/wireless, and has a control unit (330) which receives the section-per coordinate contact signal, which is generated from the section coordinate generating means (200), through a wired/wireless receiving unit (340), and outputs the section-per learning information, which is learning contents related to the learning targets (102) displayed on the section corresponding to the input section-per coordinate contact signal, through the information output unit (310).

2. The children learning mat according to claim 1, wherein the section coordinate generating means (200) has a stacked structure including:
- an upper circuit film (210);
- an insulating film (220) in which contact holes (221) are formed; and
- a lower circuit film (230), wherein contact terminals (211 and 231) are provided in the upper circuit film (210) and the lower circuit film (230) corresponding to the contact holes (221) of the insulating film (220).

3. The children learning mat according to claim 1, wherein the control box (300) includes a data storage unit (320) which stores the section-per learning information corresponding to the learning targets (102) displayed on the sections corresponding to the section-per coordinate contact signal such that the section-per learning information is output through the information output unit (310).

4. The children learning mat according to any one of claims 1 to 3, wherein the control box (300) outputs an alarm signal through the information output unit (310) if the section-per coordinate contact signal is not input to the control box for a preset period of time.

5. The children learning mat according to any one of claims 1 to 3, further comprising a replaceable sheet (130) which is attachable to and detachable from the front side of the mat (100) to allow the learning targets (102) displayed on the divided sections on the front side of the mat 100 to be replaced, wherein the learning targets (102) are displayed on sections divided on the front side of the replaceable sheet (130).

6. The children learning mat according to any one of claims 1 to 3, wherein two or more mats (100) are provided and sides of the mats (100) are all around interconnected via a connector (400).

7. A children learning mat comprising:
- a mat (100) whose front side is divided into sections on which learning targets (102) are displayed;
- a touch pen (500) and a section coordinate generating means (600) which generates a section-per coordinate contact signal representing a position of a touched section of the sections divided on the front side of the mat (100);
- an information output unit (310) which outputs section-per learning information; and
- a control box (300) which is connected to the touch pen (500) or the section coordinate generating means (600) by wired/wireless, and has a control unit (330) which receives the section-per coordinate contact signal, which is generated from the section coordinate generating means (600), through a wired/wireless receiving unit (340), and outputs the section-per learning information, which is learning contents related to the learning targets (102) displayed on the section corresponding to the input section-per coordinate contact signal, through the information output unit (310).

8. The children learning mat according to claim 7, wherein the touch pen (500) is a conductor and the section coordinate generating means (600) is a touch sensing unit.

9. The children learning mat according to claim 7, wherein the touch pen (500) is a scanner and the section coordinate generating means (600) is a film (610) on which position coordinate codes (611) representing positions of the sections divided on the front side of the mat (100) are printed.

10. The children learning mat according to claim 7, wherein the control box (300) includes a data storage unit (320) which stores the section-per learning information corresponding to the learning targets (102) displayed on the sections corresponding to the section-per coordinate contact signal such that the section-per learning information is output through the information output unit (310).

11. The children learning mat according to any one of claims 7 to 10, wherein a pressure sensing unit provided with a pressure sensor is contained in the mat (100),
- the pressure sensing unit generates an alarm output request signal if no pressure is sensed for a preset period of time, and
- the control box (300) receives the alarm output request signal generated from the pressure sensing unit and outputs an alarm signal through the information output unit (310).

12. The children learning mat according to any one of claims 7 to 10, further comprising a replaceable sheet (130) which is attachable to and detachable from the front side of the mat (100) to allow the learning targets (102) displayed on the divided sections on the front side of the mat 100 to be replaced, wherein the learning targets (102) are displayed on sections divided on the front side of the replaceable sheet (130).

13. The children learning mat according to any one of claims 7 to 10, wherein two or more mats (100) are provided and sides of the mats (100) are all around interconnected via a connector (400).

14. The children learning mat according to claim 1 or 7, wherein a humidity sensing unit provided with a humidity sensor is contained in the mat (100),
- the humidity sensing unit generates an alarm output request signal if it is detected that children spill impurities such as water on the mat (100) or take an excreta such as pee or shit on the mat (100), and
- the control box (300) receives the alarm output request signal generated from the humidity sensing unit and outputs an alarm signal through the information output unit (310).

15. The children learning mat according to claim 1 or 7, wherein a temperature sensing unit provided with a temperature sensor is contained in the mat (100),
- the temperature sensing unit senses temperature of heat generated from children who sleep on the mat (100) and generates an alarm output request signal if the sensed temperature of heat is higher than a preset temperature, and
- the control box (300) receives the alarm output request signal generated from the temperature sensing unit and outputs an alarm signal through the information output unit (310).
